# EUROPÄISCHE PATENTSCHRIFT

(11) **EP 2 272 162 B1**
(45) Veröffentlichungstag und Bekanntmachung des Hinweises auf die Patenterteilung: **27.02.2013**
(21) Anmeldenummer: 09738009.1
(22) Anmeldetag: 16.04.2009
(51) Int. Cl.: H02P 25/02, H02P 6/18, G01M 15/06

(54) **OFFSETWINKELBESTIMMUNG BEI SYNCHRONMASCHINEN**
DETERMINING OFFSET ANGLE FOR SYNCHRONOUS MACHINES
DÉTERMINATION DE L'ANGLE DE DÉCALAGE DANS DES MACHINES SYNCHRONES

(30) Priorität: 28.04.2008 DE 102008001408
(43) Veröffentlichungstag der Anmeldung: 12.01.2011
(73) Patentinhaber: Robert Bosch GmbH, 70442 Stuttgart (DE)
(72) Erfinder: BLIND, Stefan, 70736 Fellbach (DE); RAICHLE, Daniel, 71735 Eberdingen-Nussdorf (DE)
(86) Internationale Anmeldenummer: PCT/EP2009/054537
(87) Internationale Veröffentlichungsnummer: WO 2009/132965

(56) Entgegenhaltungen:
- DE-A1- 19 641 039
- JP-A- 60 051 488
- JP-A- 2001 204 190
- JP-A- 2006 296 025
- US-A- 6 081 087
- US-A1- 2003 037 767
- US-A1- 2003 210 006
- US-A1- 2007 282 461
- US-B1- 7 274 163

## Beschreibung

### Stand der Technik

Die Erfindung betrifft ein Verfahren zur Winkelerfassung von elektrischen Maschinen. Phasenstarre elektrischer Maschinen, bei denen der Rotor die gleiche Drehfrequenz aufweist wie das Statordrehfeld, erzeugen ein Drehmoment, das hochgradig vom Winkelversatz zwischen Rotor und Statordrehfeld abhängt. Ferner besteht eine Vielzahl von Anwendungen für elektrische Maschinen, bei denen die Winkelstellung der Antriebswelle der elektrischen Maschine mit dem Abtrieb synchronisiert sein muss, beispielsweise bei der Verwendung als Starter für Verbrennungsmotoren, deren Nockenwelle mit einem Drehmoment beaufschlagt wird, wobei die Winkelstellung der Nockenwelle für einen erfolgreichen Start präzise berücksichtigt werden muss.

Zur Winkelerfassung sind zahlreiche Winkelsensoren bekannt, die getrennt von der elektrischen Maschine hergestellt werden und erst nach der Fertigstellung der elektrischen Maschine an dieser befestigt werden. Insbesondere ist dies der Fall bei Hybridantrieben, bei denen der Winkelsensor erstmalig beim Zusammenbau des Traktionsmoduls mit der elektrischen Maschine verbunden werden (Erstpaarung) oder beim Austausch der elektrischen Maschine oder des Winkelsensors (Komponententausch, beispielsweise bei Reparatur). Da die elektrische Maschine, bei Hybridantrieben üblicherweise eine Synchronmaschine, nach Herstellung bereits mit Stator und Gehäuse versehen ist und nur die Welle zugänglich ist, ist es schwer möglich, die Winkelstellung des Rotors, insbesondere in Relation zu den Starterwicklungen, zu ermitteln. Auf Grund des kompakten Aufbaus eines Traktionsmoduls ist es ferner aufwändig und schwierig, einen Winkelsensor mittels Markierungen winkelgetreu an die Synchronmaschine anzubringen. Bei Erstpaarung und bei Komponenteaustausch ist daher eine winkelgetreue Montage des Sensors auf die Welle der elektrischen Maschine mit hoher Präzision schwer möglich.

Die Druckschrift DE 10 2005 056 207 A1 offenbart ein Sensorsystem mit mehreren zueinander versetzten Sensorelementen, die sich an verschiedene Wellendurchmesser anpassen lassen. Die Sensorelemente lassen jedoch nur die Bestimmung des Relativwinkels zu, um die Winkelgeschwindigkeit zu bestimmen, die Bestimmung des Absolutwinkels unter Berücksichtigung eines Offsetwinkels wird nicht betrachtet.

Es ergibt sich daher auf Grund der Paarung des Winkelsensors mit der elektrischen Maschine nach der Fertigstellung dieser beiden Komponenten ein Fehlerwinkel, der als Offsetwinkel bezeichnet wird, durch den die phasengetreue Ansteuerung der elektrischen Maschine ungenau wird. Bei phasenstarren elektrischen Maschinen wie Synchronmotoren lässt sich auf Grund des Offsetwinkels das tatsächliche Drehmoment nur sehr ungenau steuern.

Es ist daher eine Aufgabe der Erfindung, diese Nachteile zu überwinden und einen Mechanismus vorzusehen, mit dem der Fehlerwinkel zwischen Winkelsensors und elektrischer Maschine verringern lässt.

Aus der JP2006296025 A ist bekannt, ein Offsetwinkel zum Zeitpunkt eines Nulldurchgangs eines wellenförmigen induzierten Spannungssignals eines Motors zu bestimmen.

### Offenbarung der Erfindung

Die oben genannte Aufgabe wird gelöst, indem das Verfahren gemäß der beigefügten Ansprüche durchgeführt wird. Ferner wird die Aufgabe gelöst durch eine Winkelerfassungsvorrichtung, wie sie in den Ansprüchen definiert ist.

Das der Erfindung zu Grunde liegende erfinderische Konzept besteht darin, den Sensor zunächst unter in Kaufnahme einer Fehlstellung, d.h. mit einem Offsetwinkel, mit der elektrischen Maschine zu paaren. Daraufhin wird der Offsetwinket durch einfache Ansteuerung ermittelt, ohne dass eine mechanische Kalibrierung notwendig ist. Nachdem der Offsetwinkel bekannt ist, kann aus dem von Winkelgeber bzw. Winkelsensor erfassten Winkelsignal durch Abzug des Offsetwinkels die Winkelorientierung von Rotor zu Stator berechnet werden. Nach der Paarung, d.h. nach Montage des Winkelsensors bzw. Winkelgebers wird die elektrische Maschine derart angesteuert, dass sich ein bekannter Feldwinkel ergibt bzw. der sich der Feldwinkel durch Mittel erfassen lässt, die unabhängig von einem Winkelsensor sind. Der Feldwinkel bezeichnet hierbei die Orientierung zwischen Rotor und Stator und bezieht sich auf den Winkel zwischen dem Rotormagnetfeld und dem Magnetfeld, das vom Stator erzeugt wird und auf den Rotor wirkt. Die Bezeichnung Feldwinkel ergibt sich durch die Orientierung an der Richtung der magnetischen Felder des Rotors bzw. Stators. Mit dem so vorgegebenen oder erfassten Feldwinkel lässt sich ein zugehöriger Sensorwinkel verknüpfen, der von einem Winkelsensor bzw. Winkelgeber als Signal abgegeben wird. Der Winkelgeber ist mit der Welle der elektrischen Maschine verbunden und erfasst die Stellung der Welle. Die Welle ist drehfest mit dem Rotor verbunden, so dass der Sensorwinkel, unter Berücksichtigung des Offsetwinkels, den Feldwinkel wiedergibt. Somit wird eine Winkelkalibrierung ausgeführt, indem als Standard ein bekannter Feldwinkel eingestellt wird bzw. ein Feldwinkel eingestellt wird, der sich erfassen lässt. Der zugehörige Sensorwinkel wird gemessen, wobei sich eine Zuordnung zwischen bekanntem oder erfasstem Feldwinkel und dem gemessenen Sensorwinkel ergibt. Dadurch lässt sich der Offsetwinkel bestimmen, der bei der Winkelmessung zukünftig berücksichtigt wird, wobei der Sensorwinkel um den (nun bekannten) Offsetwinkel beispielsweise rechnerisch korrigiert wird, um den Feldwinkel vorzusehen.

Erfindungsgemäß wird daher eine Zuordnung zwischen einem erfassten Sensorwinkel und einem Feldwinkel erreicht, indem durch Ansteuerung der elektrischen Maschine der Stator in eine bekannte Stellung gebracht wird. Mit anderen Worten wird der Rotor zu dem Stator in einem Feldwinkel derart angeordnet, dass der Feldwinkel allein durch die Ansteuerung der elektrischen Maschine mit bekannter Präzision vorgesehen wird.

Die Erfindung sieht zur Anordnung des Rotors in einem bekannten Feldwinkel zwei Alternativen vor, die einzeln angewandt werden können, nacheinander angewandt werden können und insbesondere kombiniert werden können, um die Präzision zu erhöhen. In einer ersten Alternative wird der Stator so angesteuert, dass er eine definierte (d.h. bekannte) magnetische Feldrichtung vorgibt, nach der sich der Rotor ausrichtet. Um eine Ausrichtung zu gewährleisten, wird der Rotor lastfrei geschaltet, d.h. mechanisch von weiteren Lastquellen abgekoppelt. Der Stator gibt ein stehendes oder (langsam) rotierendes magnetisches Feld vor, und der Rotor richtet sich solange aus, bis keine Kraft mehr vom Stator auf den Rotor wirkt. Nachdem sich der Rotor nach dem Statorfeld ausgerichtet hat, bilden diese einen Winkel von 0° (oder von 90° bzw. minus 90°, wenn die Orientierung von Rotor zur betreffenden Statorwicklung betrachtet wird). Da die Orientierung des Stators, der Statorwicklung und somit auch des vom Stator erzeugten Feld bekannt ist, ist auch der Feldwinkel bekannt. Nachdem der Rotor die kraftfrei Position eingenommen hat wird vom Winkelgeber der Sensorwinkel erfasst, der dem Feldwinkel zugeordnet ist. Die Erfassung des Sensorwinkels kann gleichzeitig mit dem Anordnen des Rotors in dem vorbestimmten Feldwinkel durchgeführt werden, oder kann in einer Zeitspanne nach dem Anordnen des Rotors in dem vorbestimmten Feldwinkel durchgeführt werden, in der der Feldwinkel sich nicht ändert. Wenn ein stehendes Statormagnetfeld eingeprägt wird, wird eine Statorwicklung mit einem Strom beaufschlagt, die die Ausrichtung des Statormagnetfelds definiert. Gleichermaßen können mehrere Statorwicklungen mit einem Strom beaufschlagt werden, wobei sich die Orientierung des sich ergebenden Statormagnetfelds aus den einzelnen (gewichteten) Komponenten der verschiedenen Statorwicklungen ergibt. Ferner kann statt einem stehenden Statormagnetfeld ein rotierendes Statormagnetfeld verwendet werden, vorzugsweise ein langsam rotierendes Statormagnetfeld, d.h. mit einer Drehzahl kleiner als 100 l/min, kleiner als 50 l/min, kleiner als 20 l/min, kleiner als 10 l/min, kleiner als 5 l/min, kleiner als 2 l/min oder kleiner als 1 l/min Vorzugsweise wird bei einem rotierenden Statormagnetfeld der Sensorwinkel gleichzeitig mit dem Anordnen des Rotors in dem vorbestimmten Feldwinkel gemessen. Alternativ kann der Sensorwinkel mittels dem Winkelgeber in einer bekannten Zeitspanne nach dem Anordnen des Rotors in einem bekannten Feldwinkel gemessen werden, wobei aus der Drehzahl und der Länge der Zeitdauer auf den tatsächlichen zugehörigen Sensorwinkel geschlossen werden kann, der zum Zeitpunkt des Anordnens des Rotors in dem vorbestimmten Feldminkel vorgesehen war. Grundsätzlich beruht die in dieser ersten Alternative beschriebene Vorgehensweise zum Anordnen des Rotors in einem Feldwinkel darauf, dass der Stator eine vorbestimmte Magnetorientierung vorgibt, nach der sich der Rotor ausrichtet. Der Feldwinkel wird somit direkt durch die Ansteuerung des Stators bestimmt. In der Nähe seines Ruhepunkts (d.h. bei präziser Ausrichtung nach dem Statorwinkel, ohne das das Statorfeld eine Kraft auf den Rotor ausübt) sind die auf den Rotor wirkenden Kräfte sehr gering (≈ sin (0 ± δ), so dass üblicherweise vorhandene Reibungskräfte, beispielsweise durch die Rotorlagerung, zu einem Vorhaltewinkel führen, bei dem die Reibung eine vollständig exakte Ausrichtung des Rotors verhindert. Derartige Reibungseffekte sind vom Aufbau der Maschine abhängig und können beispielsweise geschätzt werden, empirisch ermittelt werden oder typabhängig vorgespeicherr werden. Somit lässt sich der Offsetwinkel exakter bestimmten, indem der Vorhaltewinkel bei der Berechnung des Offsetwinkels mit einbezogen wird. Je nach Drehrichtung vor dem Erfassen des Sensorwinkels wird der Vorhaltewinkel mit negativem oder mit positivem Vorzeichen mit einbezogen. Der Offsetwinkel ergibt sich somit als Summe aus dem Vorhaltewinkel und der Differenz zwischen Feldwinkel und Sensorwinkel Wie bereits bemerkt entspricht der Vorhaltewinkel der Winkelfehlstellung, die sich auf Grund von Reibungskraft ergibt. Der durch die Winkelfehlstellung vorgesehene Vorhaltewinkel definiert sich somit als Winkel zwischen einer theoretischen Ruheposition, in der sich der Rotor vollständig nach dem Statorfeld ausrichtet und somit keine Kraft mehr auf den Rotor wirkt, und dem tatsächlichen Winkel, die der Rotor einnimmt, wobei zwar eine Kraft vom Stator auf den Rotor wirkt, diese jedoch vollständig von der Reibung kompensiert wird, so dass der Rotor sich nicht zur theoretischen Ruheposition weiterbewegt. Ist der Rotor wie oben beschrieben direkt in einem vorbestimmten Feldwinkel über Ansteuerung des Stators angeordnet, so kann wie beschrieben ein stehendes oder ein rotierendes Statormagnetfeld verwendet werden, wobei bei Verwendung eines rotierenden Statormagnetfelds die Rotation vorzugsweise zumindest für eine Relaxations-Zeitdauer mit einer konstanten Drehzahl ausgeführt wird, ohne den Rotor zu beschleunigen. Sowohl bei stehendem als auch bei rotierendem Statormagnetfeld sollte der Sensorwinkel erfasst werden, wenn das System bereits eingependelt ist und somit Anfahreffekte (insbesondere Beschleunigungseffekte), d.h. Relaxationsvorgänge bereits abgeklungen sind.

Erfindungsgemäß wird eine zweite Alternative als ein Mechanismus zum Anordnen des Rotors zu dem Stator vorgesehen, wobei in diesem Fall der Feldwinkel nicht direkt über die Ansteuerung des Stators vorbekannt ist (d.h. direkt angesteuert wird), sondern der Feldwinkel selbst über eine "Feldsensorik" erfasst wird. Die Feldsensorik ist unabhängig von einem Winkelsensor, der den Winkel an einer Welle der elektrischen Maschine misst. Als Feldsensorik dient hier der Stator bzw. die Statorwicklungen, in die der Rotor durch seine Rotation eine Spannung induziert, die in direkter Weise mit dem Feldwinkel verknüpft ist. Damit die induzierte Spannung, im weiteren als Induktionsspannung bezeichnet, in den Sensorwicklungen erfasst werden kann, werden diese hierzu vorzugsweise freigeschaltet. Freischalten bedeutet in diesem Zusammenhang, dass kein Strom von einer Stromquelle oder Spannungsquelle in die Statorwicklungen eingeprägt wird bzw. das der Stromfluss innerhalb des Stators im Wesentlichen null ist, um Rückwirkungen auf den Rotor zu vermeiden. Daher ist vorzugsweise darauf zu achten, dass die Wicklungsanschlüsse voneinander isoliert sind bzw. über einen sehr hohen Widerstand miteinander verbunden sind. Dadurch wird Stromfluss in der Statorwicklung bzw. -wicklungen vermieden, so dass diese keine (wesentliche) Kraft auf den Rotor ausübt. Rückwirkungseffekte werden somit vermieden. Um die Induktionsspannung zu messen wird folglich vorzugsweise eine Spannungsmesseinrichtung verwendet, die einen hohen Innenwiderstand hat, so dass der Strom innerhalb der Statorwicklung beim Erfassen der Induktionspannung so gering wie möglich ist. Das Messen der Induktionsspannung wird vorzugsweise durch Verbinden der Statorwicklung bzw. Statorwicklungen mit einer Spannungsmesseinrichtung durchgeführt, die einen Innenwiderstand von mehr als 1 kΩ, 10 kΩ, 100 kΩ, 1 MΩ, 10 MΩ oder 20 MΩ aufweist. Bevor der Feldwinkel über die Induktionsspannung erfasst wird, wird der Rotor erfindungsgemäß in Rotation versetzt, indem ein rotierendes Statormagnetfeld eingeprägt wird. Auf Grund der Trägheit des Rotors bleibt der Rotor in rotierendem Zustand, auch nach Abschalten des eingeprägten rotierenden Statormagnetfelds. Vorzugsweise wird direkt nach der Phase des Einprägens des rotierenden Statormagnetfelds die Statorwicklunggen bzw. alle Statorwicklungen frei geschaltet, so dass die Induktionsspannung gemessen werden kann, während sich der Rotor noch im Wesentlichen unvermindert dreht. Auch ein gewisses Abbremsen durch Reibungseffekte verringern die Präzision der Feldwinkelmessung nicht, da die Feldwinkelmessung innerhalb einer vollen Wellenumdrehung (vorzugsweise innerhalb eines Drehwinkels, der im wesentlichen einer Halbwelle der Induktionsspannung entspricht) abgeschlossen ist. Durch das Rotieren des Statormagnetfelds während der Phase des Einprägens wird der Rotor auf eine relativ hohe Drehzahl beschleunigt, insbesondere höher als die Drehzahl des rotierenden Statormagnetfelds, das verwendet wird, wenn, wie oben anhand der ersten Alternative beschrieben, der Rotor durch Anlegen eines spezifischen Statorfelds direkt gemäß dem Statorfeld angeordnet wird.

Vorzugsweise wird der Rotor in der zweiten Alternative auf Grund des rotierenden Statormagnetfelds in Rotation versetzt mit einer Drehzahl von mindestens 200 l/min, mindestens 500 l/min, mindestens 1000 l/min, mindestens 1500 l/min oder mehr. Die Wahl der Drehzahl richtet sich zum einen nach der Höhe der Induktionsspannung und somit nach der möglichen Präzision der Spannungserfassung (die Amplitude ist proportional zur Drehzahl) und der Geschwindigkeit der Erfassung der Induktionsspannung bzw. der Erfassung des Sensorwinkels durch den Winkelgeber, um Fehler oder Jitter, die durch Verzögerungseffekte beim Erfassen der Induktionsspannung/des Feldwinkels ergeben, so gering wie möglich zu halten. Die Drehzahl ist somit von der Erfassungsgeschwindigkeit der Induktionsspannung, der Erfassungsgeschwindigkeit durch den Winkelgeber, die Empfindlichkeit bei der Messung der Induktionsspannung und durch Signal-/Rauschverhältnis bei der Erfassung der Induktionsspannung abhängig. Zur Erfassung des Feldwinkels kann die Induktionsspannung in einer Statorwicklung oder in mehreren Statorwicklungen erfasst werden, wobei insbesondere bei der Verwendung von zwei Statorwicklungen, die zueinander phasenversetzt sind, der Zeitpunkt erfasst werden kann, zu dem die Induktionsspannung in beiden Statorwicklungen gleich ist. Ferner kann das jeweilige Minimum oder Maximum oder der Nulldurchgang der Induktionsspannung als Messzeitpunkt verwendet werden. Der zu diesem Zeitpunkt korrespondierende Feldwinkel entspricht der Winkelmitte (geometrisches Mittel bzw. arithmetisches Mittel der Winkelorientierungen der verwendeten Statorwicklungen). Daher wird erfindungsgemäß mittels eines Komparators oder Operationsverstärkers erfasst, wenn Induktionsspannungen zweier Statorwicklungen identisch sind (inklusive Vorzeichen), wobei dann gleichzeitig der Winkelgeber abgefragt wird, um den zugehörigen Sensorwinkel zu bestimmen. Der Sensorwinkel wird in diesem Fall einem Feldwinkel zugeordnet, der der Winkelmitte der beteiligten Statorwicklungen entspricht, d.h. diejenige Winkelorientierung, die von beiden Orientierungen der Statorwicklungen gleichweit entfernt ist und gleichzeitig den minimalen Differenzwinkel zwischen den beiden Statorwicklungorientierungen bildet. Abgetastet werden hierbei die Momentanamplituden der Induktionsspannungen an den Wicklungsenden unter Berücksichtigung des Betrags und des Vorzeichens der Spannung. Anstatt den zugehörigen Sensorwinkel an dem Zeitpunkt zu erfassen, in dem die Induktionsspannungen identisch sind, kann auch der Sensorwinkel nach einer vorbestimmten Zeitperiode nach diesem Zeitpunkt erfasst werden, wobei sich aus der Drehgeschwindigkeit und der Zeitdauer auf den Sensorwinkel schließen lässt, der zu dem Zeitpunkt der Spannungsidentität der Induktionsspannungen herrschte. Mit anderen Worten kann auch nach dem Zeitpunkt der Induktionsspannungsgleichheit gemessen werden, wenn der Winkel berücksichtigt wird, um den sich der Rotor seit der Induktionsspannungsgleichheit gedreht hat.

Nachdem der Offsetwinkel gemäß einem der oben beschriebenen Verfahren erfasst wurde, kann der tatsächliche Feldwinkel aus dem Sensorwinkel berechnet werden, wobei gilt: Offsetwinkel = Feldwinkel - Sensorwinkel, d.h. Feldwinkel = Sensorwinkel + Offsetwinkel. Daher wird zunächst zu Kalibrationszwecken, nachdem der Winkelgeber mit der elektrischen Maschine gepaart wurde, der Offsetwinkel nach einem der oben beschriebenen Verfahren oder einer Kombination hiervon ermittelt, der Offsetwinkel in einem Speicher abgelegt und im Weiteren bei der Berechnung des Feldwinkels aus dem Sensorwinkel alleine berücksichtigt. Nachdem der Offsetwinkel bestimmt wurde, wird der Feldwinkel gemessen, indem der Winkelgeber abgefragt wird und der so vorgesehene Sensorwinkel mit dem Offsetwinkel addiert wird, um den tatsächlichen Feldwinkel zu bestimmen. Der Feldwinkel wird vorzugsweise an eine Muttersteuerung weitergeleitet, beispielsweise an eine feldorientierte Regelung (FOR).

Das oben beschriebene Verfahren ist für eine Vielzahl von elektrischen Maschinen geeignet, insbesondere für Synchronmaschinen, beispielsweise permanent erregte Synchronmaschinen. Die Synchronmaschine kann aber auch fremd erregt oder selbst erregt sein. Insbesondere bei der Verwendung des Verfahrens zur Offsetwinkelbestimmung einer Synchronmaschine, die in einem Traktionsmodul eines Hybridantriebs dient, kann die so vorgesehene präzise Feldorientierung dazu dienen, den Synchronmotor sowohl als Starter für einen Verbrennungsmotor als auch als Antriebsmodul zur Fortbewegung eines Fahrzeugs zu verwenden. Das Verfahren ist insbesondere zur Offsetwinkelbestimmung bzw. Feldwinkelbestimmung für elektrische Maschinen geeignet, bei denen sich der Rotor mit der Drehfrequenz des Statormagnetfelds dreht und zwischen Stator und Rotor nur ein Fadenversatz herrscht, jedoch kein Schlupf vorgesehen ist.

Die Erfindung wird ferner von einer Winkelerfassungsvorrichtung umgesetzt, die Anschlüsse zum Ansteuern des Stators umfasst, um den Rotor in einem Feldwinkel zu dem Stator anzuordnen. Die Winkelerfassungsvorrichtung umfasst ferner Anschlüsse zur Aufnahme von Signalen, die dem Sensorwinkel entsprechen, d.h. Anschlüsse zur Verbindung mit einem Winkelgeber. Wenn die Winkelerfassungsvorrichtung auch dafür geeignet sein soll, den Feldwinkel anhand der Induktionsspannung in den Statorwicklungen zu bestimmen, so umfasst die Winkelerfassungsvorrichtung vorzugsweise einen Eingang für mindestens eine Induktionsspannung, die in dem Stator erzeugt wird, sowie einen Steueranschluss, mit dem sich Statorwicklungen von einer elektrischen Energiequelle trennen lassen. Beispielsweise kann die Winkelerfassungsvorrichtung einen Ausgang zur Ansteuerung von Leistungshalbleitern umfassen, mit denen der Stator angesteuert wird, oder kann selbst Trennschalter umfassen, mit denen die Statorwicklungen freigeschaltet werden.

Die Winkelerfassungsvorrichtung umfasst ferner eine Datenverarbeitungsvorrichtung, beispielsweise einen Mikroprozessor oder eine CPU, mit der die Schritte des erfindungsgemäßen Verfahrens umgesetzt werden, wobei die Verfahrensschritte zumindest zum Teil in Software und gegebenenfalls teilweise in Hardware implementiert werden. Die Winkelerfassungsvorrichtung umfasst ferner vorzugsweise einen Komparator, der die Gleichheit von Induktionsspannungen erfassen kann, und ein entsprechendes Signal, vorzugsweise eine Flanke, zum entsprechenden Zeitpunkt abgibt oder eine Zeitmarke abgibt, die den Zeitpunkt wiedergibt. Als Winkelgeber können digitale oder analoge Vorrichtungen verwendet werden, vorzugsweise ein digitaler Sensor, der aus drei Sensorelementen besteht, welche jeweils um 120° zueinander versetzt sind. Die Sensorelemente geben vorzugsweise zwei Pegel aus: einen ersten, wenn ein Winkel erfasst wird, der innerhalb einer Spanne von 180° liegt und einen zweiten, der abgegeben wird, wenn ein Winkel außerhalb dieser Spanne liegt. Beginn bzw. Ende dieser Spannen der jeweiligen Sensorelemente sind wie bereits beschrieben um 120° zueinander versetzt. Es ergibt sich somit ein dreistelliges binäres Signal, mit dem bestimmt werden kann, in welchem 60°-Sektor der erfasste Winkel liegt. Aneinander grenzende 60°-Sektoren unterscheiden sich in ihrem zugehörigem Bitwort nur um eine Stelle, ferner sind Bitworte, bei den alle Stellen den selben Pegel aufweisen, nicht zulässig. Dadurch lassen sich Sensorfehler bzw. Übertragungsfehler einfach erkennen. Vorzugsweise ist das von dem Winkelgeber abgegebene Winkelsignal in einem Gray-Code dargestellt. Um von dem dreistelligen digitalen Signal, das den 60°-Sektor wiedergibt, auf den exakten Winkel schließen zu können, werden die Flanken des digitalen Signals und die zugehörigen Zeitpunkte erfasst; durch die Geschwindigkeit der Flankenabfolge lässt sich auf die Drehzahl schließen, wodurch sich aus dem Zeitpunkt eines Flankenwechsels und der erfassten Drehgeschwindigkeit auf den extrapolierten exakten Winkel schließen lässt. Vorzugsweise wird die steigende Flanke des Sensorelements als Referenz verwendet, welches einem Absolutwinkel von 0-180° entspricht, d.h. um 0° zur Grundstellung versetzt ist.

In einer besonders bevorzugten Ausführungsform des erfindungsgemäßen Verfahrens wird zuerst die erste Alternative und darauffolgend die zweite Alternative des erfindungsgemäßen Verfahrens durchgeführt. Zunächst wird ein langsames synthetisches Drehfeld erzeugt, wobei die Welle der elektrischen Maschine belastungsfrei, d.h. abgekoppelt vorgesehen wird. Das langsame synthetische Drehfeld kann im Extremfall bis hin zu einem stehenden Feld verlangsamt werden, so dass dieser Begriff im Folgenden auch ein stehendes Feld mit umfassen soll. Der Rotor richtet sich nach dem Statorfeld aus, wodurch der sich ergebende Sensorwinkel dem Feldwinkel zugeordnet werden kann, der durch die Ausrichtung des Rotors eingenommen wird. Dadurch gibt sich ein erster d.h. provisorischer Offsetwinkel, der gegebenenfalls mit einem reibungsbedingten Vorhaltewinkel beaufschlagt ist. Jedoch ist der provisorische Offsetwinkel präzise genug, um die Maschine auf eine hohe Drehzahl zu fahren, ohne dass das Risiko einer Beschädigung der elektrischen Maschine durch fehlerhafte Ansteuerung besteht. Daher wird unter Zuhilfenahme des provisorischen Offsetwinkels die Maschine kalibriert und unter Berücksichtigung des Offsetwinkels angesteuert, um eine hohe Drehzahl zu erreichen, beispielsweise 1000 1/min, woraufhin der Stator in Freilauf geschaltet wird, d.h. sämtliche elektrische Energiequellen von den Statorwicklungen getrennt werden, um einen Statorstrom von im wesentlichen null zu erreichen. Daraufhin wird ein präziserer Offsetwinkel aus den Induktionsspannung im Freilauf erfasst. Während der Bestimmung des Offsetwinkels aus den Induktionsspannungen im Freilaufist der Rotor vorzugsweise unbelastet, d.h. bis auf systemimmanente Lagerreibungen bzw. Luftreibung an keine mechanische Lasten angeschlossen. Nachdem aus einem weiteren Sensorwinkel und einem zugehörigen Feldwinkel (aus der Induktionsspannung) erfasst wurde und somit ein präziserer Offsetwinkel vorgesehen wurde, wird dieser zwischengespeichert und die Maschine wird abgebremst. Vorzugsweise wird auch der provisorische Offsetwinkel zwischengespeichert oder in einem Speicher abgelegt, beispielsweise direkt nach Berechnung des provisorischen Offsetwinkels. Das Einprägen des langsamen Drehfelds oder stehenden Felds, das Berechnen und Ablegen des provisorischen Offsetwinkels, die Aktualisierung der Winkelsensormessung gemäß ermitteltem Offsetwinkel, die Beschleunigung der Maschine auf 1000 1/min, das Erfassen des präziseren, zweiten Offsetwinkels aus den Induktionsspannungen und das Abbremsen der Maschine wird vorzugsweise nacheinander innerhalb einer kurzen Zeitdauer durchgeführt, beispielsweise in einer Zeitdauer von weniger als 5 sec., beispielsweise innerhalb von 2 sec. Das Einprägen des langsamen Drehfelds bzw. stehenden Felds und das Einprägen des Drehfelds, das zur Beschleunigung der Maschine auf 1000 l/min führt, wird vorzugsweise durch eine Leistungselektronik vorgenommen, insbesondere einen Pulswechselrichter, der von einer feldorientierten Regelung angesteuert wird. Die erfindungsgemäße Winkelerfassungsvonichtung ist vorzugsweise mit der feldorientierten Regelung verbunden. Als überwachende Steuerung wird vorzugsweise eine "vehikel managment unit" VMU verwendet, die mit der feldorientierten Regelung und der Leistungsregelung direkt oder indirekt verbunden ist und das erfindungsgemäße Verfahren einleitet bzw. steuert. Das mechanische Entkoppeln der Welle vor dem Ausführen der ersten Offsetwinkelmessung kann von der VMU oder von einem anderen Steuergerät gesteuert sein.

Im weiteren wird ein erfindungsgemäßes Beispiel zur Offsetkalibrierung aus dem Stillstand für eine elektrische Maschine beschrieben, die zusammen mit einem Verbrennungsmotor VM in einem Hybridantrieb eines Fahrzeugs eingesetzt ist. Zunächst ist ein Pulsweitenregler PWR, der die elektrische Maschine EM ansteuert, im Zustand Standby, die Drehzahl der elektrischen Maschine ist null (Stillstand), die elektrische Maschine kann frei drehen, da eine Kupplung die den VM mit der EM verbindet, geöffnet ist. Ein Getriebe des Hybridantriebs ist im Leerlauf d.h. im Zustand "P". Zunächst wird vom PWR geprüft ob in einem Speicher, bsp. in einem EEPROM eine Information "initiale Offsetkalibrierung erforderlich" gespeichert ist. In diesem Fall wird vom PWR ein Diagnosebit gesetzt. Die VMU öffnet die Kupplung zwischen VM und EM Es wird von der VMU sichergestellt, ob das Getriebe im Zustand "P" ist. Die VMU fordert beim PWR eine Offsetkalibrierung an. Daraufhin wird von der PWR in das EEPROM die Information "initiale Offsetkalibrierung erforderlich" geschrieben. Die PWR setzt das Diagnosebit; der in dem EEPROM gespeicherte Zustand der Offsetkalibrierung wird von dem PWR auf "noch auszuführen" gesetzt. Die PWR bestimmt ein Initialoffset durch setzen des Feldwinkels auf eine vorbestimmte Größe, indem ein Statorfeld vorgegeben wird, demnach sich der Rotor ausrichtet. Die PWR beschleunigt dann die EM auf 1000 1/min, vorzugsweise unter Berücksichtigung des Initial-offsets bei der Ansteuerung der EM Nach der Beschleunigung wird von der PWR eine präzise Offsetkalibrierung durchgeführt, in dem der Feldwinkel basierend auf der Phasenlage der Induktionsspannung ermittelt wird. Nach erfolgreicher Kalibrierung schreibt die PWR in den EEPROM die Information "keine Offsetkalibrierung erforderlich / Kalibrierung ausgeführt", die PWR wird in "Standby" versetzt, die EM wird durch einen aktiven Kurzschluss der Statorwicklungen abgebremst. Im allgemeinen kann nach dem Bestimmen des Offsetwinkels gemäß der oben beschriebenen zweiten Alternative die EM durch niederohmiges Verbinden der Statorwicklungsanschlüsse abgebremst werden oder durch einen anderen Stromfluss in dem Stator, der durch Wechselwirkung zwischen Rotor und Stator den Rotor abbremst. Gemäß dem beschriebenen Beispiel wird nach dem Abbremsen des Rotors die Offsetkalibrierung durch die VMU abgeschlossen, und die VMU fordert einen beliebigen Zustand an. Alternativ kann die VMU auch eine Kupplung zum Motor schließen und damit einen Start einleiten. Die VMU muss nicht zwingend darauf warten, dass die E-Maschine abgebremst ist.

Im weiteren ist ein erfindungsgemäßes Beispiel zur Offsetnachkalibrierung für eine elektrische Maschine beschrieben, die zusammen mit einem Verbrennungsmotor VM in einem Hybridantrieb eines Fahrzeugs eingesetzt ist. Eine Pulsweitenreglung PWR steuert die elektrische Maschine EM an. Der VM läuft, die Drehzahl der EM ist innerhalb eines Normalbetriebintervalls (bsp. gemäß einer Anforderung), die Spannung einer Batterie, die den EM antreibt, ist größer als eine Induktionsspannung, die an dem Stator anliegt. Die VMU (vehicle management unit) fordert eine Offsetkalibrierung an, bsp. durch Übertragung eines entsprechenden Bits oder Signals an die PWR. Alternativ kann auch die PWR eine Offsetkalibrierung anfordern (durch Abgabe eines Signals oder durch Setzen eines Bits). Der in dem EEPROM gespeicherte Zustand der Offsetkalibrierung wird von dem PWR auf"noch auszuführen" gesetzt. Die PWR führt eine präzise Offsetkalibrierung anhand der Induktionsspannung durch, wobei die Rotation der EM zur Erzeugung der Induktionsspannung genutzt wird. Da die EM bereits läuft (Drehzahl zwischen einer Minimaldrehzahl und einer Maximaldrehzahl), kann die Rotation des Rotors genutzt werden, ohne diesen in einem zusätzlichen Schritt vorher zu beschleunigen. Vorzugsweise wird lediglich überprüft, ob sich die aktuelle Drehzahl der EM für eine Feldwinkelmessung mittels Induktionsspannung eignet. Bei Eignung wird die EM vor der Kalibrierung weder beschleunigt noch abgebremst. Bei einer Drehzahl außerhalb des Drehzahlintervalls, das sich zur Kalibrierung eignet, wird die EM entsprechend beschleunigt oder abgebremst, um eine geeignete Drehzahl vorzusehen. Die EM ist vorzugsweise lastfrei (bsp. durch offene Kupplungen) und durch die Statorwicklungen fließt ein Strom von im wesentlichen null, um mechanische Rückkopplungen auf den Rotor zu vermeiden. Nach erfolgreicher Kalibrierung schreibt die PWR in den EEPROM die Information "keine Offsetkalibrierung erforderlich/Kalibrierung ausgeführt". Dann wird die PWR wieder in einen Fahrbetriebszustand versetzt, der gemäß Fahrervorgabe / VMU einzunehmen ist.

Das erfindungsgemäße Verfahren ist insbesondere für elektrische Maschinen eines Fahrzeug-Hybridantriebs geeignet, bei der die elektrische Maschine kinetische Energie zur Traktion eines Fahrzeugs erzeugt. Ferner kann die elektrische Maschine ebenso als Starter für einen Verbrennungsmotor dienen, der zusammen mit der elektrischen Maschine in dem Hybridantrieb als Antriebsaggregat arbeitet. Der Antrieb kann ferner steuerbare Getriebe und Kupplungen umfassen. Die elektrische Maschine ist vorzugsweise eine Synchronmaschine, die permanenterregt ist, beispielsweise mittels eines Permanentmagneten innerhalb des Rotors und/oder durch dauerhafte Ansteuerung einer Rotorwicklung. Der Hybridantrieb kann ein Mild-Hybrid, Micro-Hybrid, Voll-Hybrid oder Power-Hybrid in Seriell- oder Parallelausführung sein, bei dem die elektrische Maschine und der Verbrennungsmotor zusammen oder einzeln als Fahrzeugantriebsaggregat verwendet werden können. Die elek-trische Maschine wird von einer aufladbaren Batterie versorgt.

### Kurze Beschreibung der Figuren

Die Figur 1 zeigt einen Querschnitt durch eine elektrische Maschine zur Darstellung der Orientierung des Stators und des Rotors.

Die Figur 2 zeigt eine beispielhafte Orientierung des Rotors, des Stators und einer erfassten Sensorwinkelrichtung.

Die Figur 3 zeigt ein Zeitverlaufsdiagramm mit dreiphasigen Induktionsspannungen.

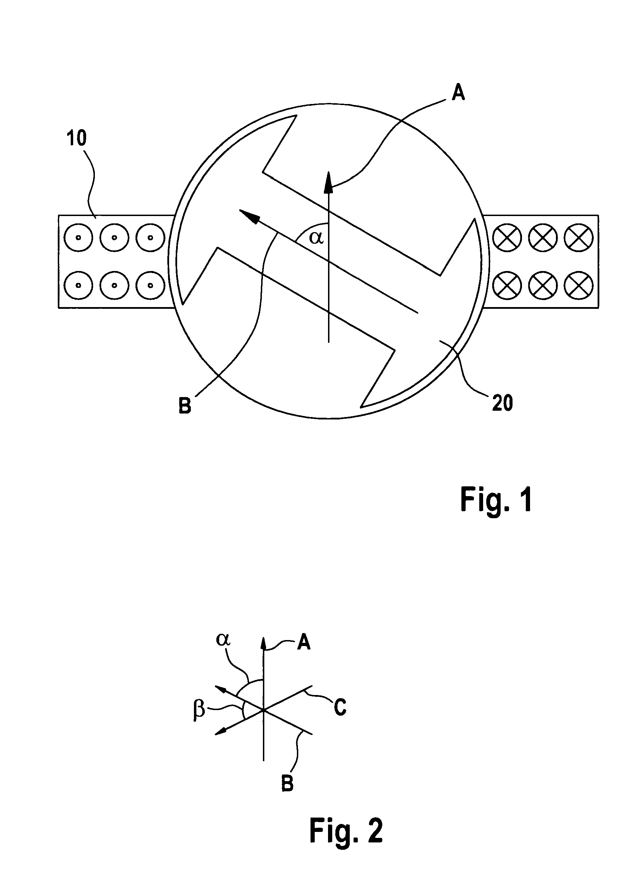

In der Figur 1 ist eine elektrische Maschine mit einer Statorwicklung 10, einem Rotor 20 dargestellt. Ein durch die Statorwicklung 10 fließender Strom tritt in dem links dargestellten Wicklungsabschnitt aus der Zeichenebene heraus und tritt in den rechts dargestellten Wicklungsabschnitt in die Zeichenebene ein. Das dadurch erzeugte magnetische Feld hat die Richtung des Pfeils A, gestrichelt dargestellt. Aus Gründen der Klarheit ist nur eine einzelne Statorwicklung dargestellt, üblicherweise sind Statorwicklungen entlang des gesamten Umfangs des Stators gleichmäßig angeordnet. Der Stator 20 ist erregt (beispielsweise mittels Permanentmagnet oder Rotorwicklung, nicht dargestellt) und weist ein Magnetfeld auf, das in Längsrichtung des Stators orientiert ist, wie es Pfeil B darstellt. Die Kraft zwischen Rotor und Stator ist proportional zu sin(α), wobei α den Winkel zwischen dem von Stator erzeugten Feld und dem Feld des Rotors entspricht. Wird daher die Statorwicklung mit einem Strom beaufschlagt, wodurch ein Statorfeld eingeprägt wird, so richtet sich der Rotor nach diesem Feld aus, bis die Richtung B mit der Richtung A übereinstimmt. Wird daher die Statorwicklung 10 bestromt und der Rotor von sämtlichen mechanischen Lasten entkoppelt, so wird der Rotor automatisch in einem vorbestimmten Feldwinkel angeordnet, der der Orientierung der Rotorwicklung 10 entspricht. Dadurch lässt sich der Rotor in einem vorbestimmten Feldwinkel anordnen, und der zugehörige Sensorwinkel kann erfasst werden, wodurch sich der entsprechende Offsetwinkel ergibt.

In Figur 2 sind die Orientierung des Startermagnetfelds A und die Orientierung des Rotors B dargestellt, die den Orientierungen in Figur 1 entsprechen. Wie bereits bemerkt ist der Rotor noch nicht gemäß dem Starterfeld ausgerichtet. Der Rotor ist über eine Welle mit einem Winkelgeber verbunden, der einen Winkelwert ausgibt, welcher der Ausrichtungen C entspricht. Richtet sich der Rotor nach dem Statorfeld aus, so wird der Winkel α gleich 0 und für den Rotor ergibt sich die bekannte Ausrichtung der Statorwicklung, die auf den Rotor wirkt. Die Fehlstellung des Winkelgebers, d.h. der Offsetwinkel ist dann durch β gegeben, sofern die Statorfeldorientierung einem Absolutwinkel von 0 entspricht.

Im Folgenden werden die Winkelorientierungen betrachtet, die sich ergeben, wenn der Feldwinkel durch Messen des Verlaufs der Induktionsspannung erfasst wird und der Rotor in Rotation ist. In diesem Fall ergäbe sich durch Erfassen der Phase die Induktionsspannung der Feldwinkel zwischen Rotor und Statorwicklung, in der die Induktionsspannung erzeugt wird.

Bezogen auf die Figur 2 zeigt in diesem Fall die Orientierung A die Absolutorientierung der Statorwicklung, und B zeigt die Orientierung des Rotors, die aus der Phase der Induktionsspannung ermittelt wird. Der zugehörige Sensorwinkel, der im Zusammenhang mit der Rotororientierung B steht, ist mit Pfeil C dargestellt. Somit ergibt sich, dass auf Grund der Induktionsspannung ein Winkelversatz von α zwischen Statorwicklungsorientierung A und Rotororientierung B vorgesehen ist, während der zugehörige erfasste Sensorwinkel einer Orientierung C entspricht, die um den Winkel β zur Orientierung B versetzt ist. Der so erfasste Offsetwinkel β kann im Folgenden einfach von dem erfassten Sensorwinkel abgezogen werden, wodurch sich die zugehörige Winkelorientierung B des Rotors ergibt.

Während bei dem Vorsehen des Feldwinkels gemäß der ersten Alternative (Anlegen eines Statorfeld, Ausrichten des Rotors gemäß Statorfeld) der Rotor parallel zum Statorfeld ausrichtet, wird die Induktionsspannung als Ableitung des Feldes in der Statorwicklung vorgesehen, so dass sich ein Extremwert ergibt, wenn der Rotor parallel zur Statorwicklung steht und diese Orientierung durchläuft, und sich ein Nulldurchgang ergibt, wenn der Rotor senkrecht zur Statorwicklung ist und diese Orientierung durchläuft. Je nach Bezugspunkt und gewählter Alternative wird dies bei der Erfassung des Feldwinkels berücksichtigt, wobei zwischen der Ebene, in der die Statorwicklung liegt, und der Orientierung des Statorfelds, das von der Statorwicklung erzeugt wird, ein Winkeldifferenzbetrag von 90° liegt.

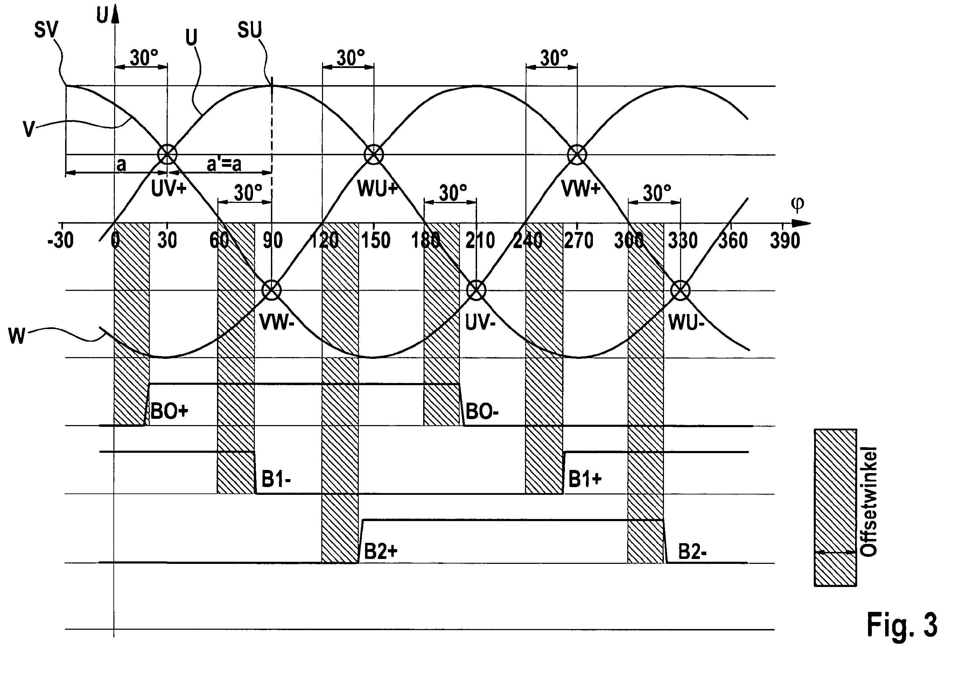

Die Figur 3 zeigt die dreiphasige Induktionsspannung von Statorwicklungen, die 120° zueinander versetzt sind. Die Phasenspannungen U, V und W sind in Sinusform oben dargestellt, während zugehörige dreistellige digitale Winkelsignale B0, B1 und B2 im unteren Teil des Diagramms von Figur 3 dargestellt sind. Stellen, an denen zwei Induktionsspannungen, die an den Statorwicklungen anliegen, gleich sind, sind mit einem Kreis gekennzeichnet. Beispielsweise bei einem Winkel ϕ von 30° sind die Spannungen der Phasen U und V identisch, so dass zu diesem Zeitpunkt klar ist, dass sich der Rotor in der Winkelmitte zwischen der Statorwicklung der Phase U und der Statorwicklung der Phase V aufhält. Dadurch wird der Feldwinkel von der Feldsensorik erfasst, die von den Statorwicklungen und der zugehörigen Spannungserfassung vorgesehen wird. Gleichzeitig wird der Sensorwinkel über die Signale B0, B1 und B2 erfasst, insbesondere über die jeweiligen Übergangsflanken der Sensorwinkelsignale. Es ist zu erkennen, dass das Sensorwinkelsignal B0 keine aufsteigende Flanke bei ϕ gleich 0 aufweist, wie es der Fall wäre, wenn der Winkelgeber präzise mit dem Feld ausgerichtet wäre und der Offsetwinkel gleich 0 wäre. Stattdessen zeigt der gestrichelte Bereich den Offsetwinkel, um den das Sensorwinkelsignal dem tatsächlichen Feldwinkel nachläuft. Der Feldwinkel, d.h. die Rotorstellung ist durch die Mitte der Ausrichtungswinkel des Statorfelds gegeben, wie es durch die Abstände A und A' in Figur 3 dargestellt ist. Dadurch kann der Offsetwinkel erfasst werden, indem die Phase, die zu dem Kreuzungspunkt UV+ gehört, mit dem zugeordneten Sensorwinkel, d.h. mit der Phase der Flanke von B0+ bzw. den weiteren Sensorkomponentensignalen B1 und B2 verglichen wird. Es ist aus Figur 3 ersichtlich, dass der Kreuzungspunkt UV+ einem Feldwinkel von 30° entspricht, wobei jedoch die Flanke von B0+ einen Winkel anzeigt, der um den gestrichelten Bereich verringert ist. Mit anderen Worten müsste die Flanke B0+ bereits bei ϕ gleich 0 aufgetreten sein, wobei jedoch der Offsetwinkel (gestrichelter Bereich) diese Verzögerung verursacht. Durch Ausweiten der Signale B0, B1 und B2 wird somit erfindungsgemäß ermittelt, dass zum Zeitpunkt ϕ gleich 30° (erfasst durch die Induktionsspannungen) der Winkelgeber einen um den Offsetwinkel verringerten Sensorwinkel angibt, wobei bei einem Offsetwinkel von 0 die Flanke B0+ 30° vor dem Kreuzungspunkt UV+ auftreten müsste. Zur zukünftigen Berechnung des Feldwinkels kann somit der Sensorwinkel (siehe Fadenspannungen U, V, W; Kreuzungspunkte) verwendet werden, wobei der Offsetwinkel derart berücksichtigt wird, dass dieser im Falle von Figur 3 zu den Sensorwinkelwert hinzuaddiert wird.

Zur Berechnung der geometrischen Mitte der Ausrichtungswinkel wurde in Figur 3 die Spitze der Phasenspannungen U und V verwendet. Stattdessen kann, wie direkt aus Figur 3 ersichtlich ist, auch der Nulldurchgang von U und V verwendet werden (0° bzw. 60°). Jedoch geben die beiden benachbarten Spitzen (SV, SU) die tatsächliche Anordnung der Statorwicklungen im Raum an, die, auf Grund des dreiphasigen Systems, um 120° zueinander versetzt sind. Die Abstände A bzw. A' entsprechen so der Hälfte von 120°, d.h. 60°. Es ist ersichtlich, dass die Phasen U und V nur beispielhaft ausgewählt wurden, es können gleichermaßen auch die Induktionsspannungen der Phasenpaare V, W und U, W miteinander verglichen werden. Die jeweiligen Kreuzungspunkte sind mit den entsprechenden Phasenbezeichnungen U, V, W gekennzeichnet und mit einem Plus versehen, wenn die jeweiligen positiven Spitzen (Maxima) als Bezugspunkt genommen werden, und sind mit einem Minus versehen, wenn die benachbarten negativen Spitzen (Minima) als Bezugspunkt ausgewählt werden. Als ein Beispiel wird der Kreuzungspunkt VW- verwendet, bei dem die Phasen Vund W die gleiche Spannung aufweisen und der Kreuzungspunkt VW- zwischen zwei benachbarten negativen Spitzen der Phasen Vund W, d.h. in der geometrischen Mitte zwischen diesen Spitzen, gelegen ist. Die Mitte VW- wird vorzugsweise arithmetisch berechnet, d.h. 30° (negative Spitze Phase W) + 150° (negative Spitze Phase V) = 180°; 180:2 (Mittelwertbildung durch Normierung der Summe) = 90°. Die so berechneten 90° (Summenbildung der Winkelwerte, Division der Summe durch die Anzahl der verwendeten Winkelwerte) ist durch den Kreuzungspunkt VW- dargestellt und entspricht der Mitte der Orientierungen des von den Phasen V und W erzeugten Statordrehfelds. Alternativ kann auch die Phase einer Wicklung betrachtet werden, wobei das Maximum der Phase ermittelt wird (beispielsweise U, siehe Spitze SU) und der zugehörige Feldwinkel der Mitte der Orientierungen der beiden anderen Phasen zugeordnet wird. In Figur 3 ist als Beispiel die Spitze SU dargestellt, die der Stelle des Schnittpunkts VW- entspricht und somit der Mitte der Phasenorientierungen V und W zugeordnet werden kann. Zur Erfassung der Spitze wird, anstatt eines Komparators bei der Erfassung der Induktionsspannungsgleichheit, beispielsweise ein Differentiator verwendet, dessen Vorzeichenwechsel die Stelle der Spitze kennzeichnet. Als Differentiator kann ein übliches RC-Glied verwendet werden, vorzugsweise in Verbindung mit einem Operationsverstärker. Ebenso kann ein Nulldurchgangsdetektor verwendet werden, um den Nulldurchgang der Induktionsspannung einer Statorwicklung zu erfassen, wobei an der Stelle des Nulldurchgangs die Statorwicklung senkrecht zu dem Rotor steht. Die Richtung des Vorzeichenwechsels wird vorzugsweise verwendet, um zu ermitteln, ob der Rotor um +90° oder um -90° zu der Statorwicklung geneigt ist.

## Patentansprüche

1. Verfahren zur Bestimmung eines Offsetwinkels einer elektrischen Maschine, die einen Stator (10), einen Rotor (20) und eine mit dem Rotor (20) verbundene Welle umfasst, wobei die elektrische Maschine eine Synchronmaschine, eine fremderregte oder selbsterregte Synchronmaschine, eine permanenterregte Synchronmaschine, eine Synchronmaschine, die als elektrisches Traktionsmodul eines Hybdridantriebs eingerichtet ist, oder eine Gleichstrommaschine ist, mit den Schritten:
- Schalten des Rotors in einen im wesentlichen lastfreien Zustand;
- Anordnen des Rotors (20) zu dem Stator (10) in einem Feldwinkel, der der Ausrichtung eines vom Rotor (20) erzeugten Rotormagnetfelds (B) bezogen auf die Ausrichtung eines vom Stator (10) erzeugten Statormagnetfelds (A) entspricht; wobei das Anordnen des Rotors (20) umfasst: Beaufschlagen der Statorwicklung mit einem Strom, wodurch ein rotierendes Statormagnetfeld (A), das dem Feldwinkel entspricht, eingeprägt und der Rotor (20) in Rotation versetzt wird;
**gekennzeichnet durch** die Schritte:
- Erfassen eines Sensorwinkels **durch** Messung mit einem Winkelgeber, der mit der Welle verbunden ist und als digitaler Sensor mit drei Sensorelementen ausgeführt ist, wobei der erfasste Sensorwinkel dem Feldwinkel zugeordnet ist, mit den Schritten:
- Erfassen der Flanken der digitalen Signale der Sensorelemente und der zugehörigen Zeitpunkte;
- Bestimmen der Drehgeschwindigkeit aus der Geschwindigkeit der Flankenabfolge;
- Extrapolation aus dem Zeitpunkt des Flankenwechsels und der Drehgeschwindigkeit auf den Sensorwinkel;
- Bestimmung eines ersten Offsetwinkels als Funktion der Differenz zwischen Feldwinkel und Sensorwinkel;
- Beschleunigung der elektrischen Maschine unter Berücksichtigung des ersten Offsetwinkels **durch** Einprägen eines rotierenden Statormagnetfelds (A) auf eine höhere Drehzahl als die Drehzahl, die bei der Bestimmung des ersten Offsetwinkels verwendet wird;
- Freischalten aller Statorwicklungen des Stators, während die Rotation auf Grund der Trägheit des Rotors fortgeführt und der Feldwinkel **durch** Messen des Verlaufs der Induktionsspannung erfasst wird, die innerhalb der elektrischen Maschine **durch** die Rotation des Rotors (20) induziert wird;
- Erfassen des Zeitpunktes, an denen die Induktionsspannung zweier Statorwicklungen gleich ist, wobei der zu diesem Zeitpunkt korrespondierende Winkel der Feldwinkel ist;
- Erfassen des zugehörigen Sensorwinkels zum Zeitpunkt, in dem die Induktionsspannungen gleich sind;
- Bestimmung des zweiten Offsetwinkels **durch** Bildung der Differenz zwischen Feldwinkel und Sensorwinkel.

2. Verfahren nach Anspruch 1, wobei der Rotor (20) angeordnet wird durch Einprägen eines langsam rotierenden Statormagnetfelds (A), wobei das langsam rotierende Statormagnetfeld (A) eine Drehzahl aufweist, bei der Luftwiderstand, Lagerreibung und weitere die Rotordrehung hemmende Lasten vernachlässigbar sind; und Vorsehen des Feldwinkels als Winkel, der der Orientierung derjenigen Statorwicklung (10) entspricht, die das Statormagnetfeld (A) erzeugt, oder dem Winkelmittel aller gemäß ihrer Kraftausübung auf den Rotor (20) gewichteten Statorwicklungen entspricht.

3. Verfahren nach Anspruch 1 oder 2, wobei der Offsetwinkel als Differenz zwischen Feldwinkel und Sensorwinkel vorgesehen wird, oder der Offsetwinkel als Summe aus einem Vorhaltewinkel und Differenz zwischen Feldwinkel und Sensorwinkel vorgesehen wird, wobei der Vorhaltewinkel der Winkelfehlstellung entspricht zwischen einem Nullstellungswinkel, in dem keine Kraft auf den Rotor (20) ausgeübt wird, und einem Winkel, in dem eine Kraft auf den Rotor (20) ausgeübt wird, die gleich der Reibungskraft ist, die auf den Rotor (20) wirkt.

4. Verfahren nach einem der vorangehenden Ansprüche, wobei ein rotierendes Statorfeld eingeprägt wird und der Feldwinkel und der Sensorwinkel gleichzeitig erfasst werden.

## Claims

1. Method for determining an offset angle of an electric machine which comprises a stator (10), a rotor (20) and a shaft connected to the rotor (20), the electric machine being a synchronous machine, an externally excited or self-excited synchronous machine, a permanently excited synchronous machine, a synchronous machine which is set up as an electric traction module of a hybrid drive, or a DC machine, and the steps of:
- connecting the rotor in a substantially load-free state;
- arranging the rotor (20) relative to the stator (10) at a field angle which corresponds to the alignment of a rotor magnetic field (B) generated by the rotor (20) with reference to the alignment of a stator magnetic field (A) generated by the stator (10); the arrangement of the rotor (20) comprising: applying a current to the stator winding, as a result of which a rotating stator magnetic field (A) which corresponds to the field angle is impressed and the rotor (20) is set in rotation;
**characterized by** the steps of:
- acquiring a sensor angle by measurement with an angle transmitter which is connected to the shaft and is designed as a digital sensor with three sensor elements, the acquired sensor angle being assigned to the field angle, having the steps of:
- acquiring the edges of the digital signals of the sensor elements and the associated instants;
- determining the rotational speed from the speed of the edge sequence;
- extrapolating from the instant of the edge change and the rotational speed to the sensor angle;
- determining a first offset angle as a function of the difference between field angle and sensor angle;
- accelerating the electric machine taking the first offset angle into account by impressing a rotating stator magnetic field (A) up to a higher speed of rotation than the speed of rotation which is used to determine the first offset angle;
- isolating all stator windings of the stator while the rotation is continued on the basis of the inertia of the rotor and the field angle is acquired by measurement of the profile of the induction voltage which is induced inside the electric machine by the rotation of the rotor (20);
- acquiring the instant at which the induction voltage of two stator windings is equal, the angle corresponding to this instant being the field angle;
- acquiring the associated sensor angle at the instant when the induction voltages are equal; and
- determining the second offset angle by forming the difference between field angle and sensor angle.

2. Method according to Claim 1, in which the rotor (20) is arranged by impressing a slowly rotating stator magnetic field (A), the slowly rotating stator magnetic field (A) having a speed of rotation at which the air resistance, bearing friction and further loads inhibiting the rotor rotation are negligible, and providing the field angle at an angle which corresponds to the orientation of that stator winding (10) which generates the stator magnetic field (A), or corresponds to the mean angle of all stator windings weighted in accordance with the force exerted by them on the rotor (20).

3. Method according to Claim 1 or 2, in which the offset angle is provided as the difference between field angle and sensor angle, or the offset angle is provided as the sum of a lead angle and the difference between field angle and sensor angle, the lead angle corresponding to the error angle position between a zero position angle at which no force is exerted on the rotor (20), and an angle at which there is exerted on the rotor (20) a force which is equal to the friction force acting on the rotor (20).

4. Method according to one of the preceding claims, in which a rotating stator field is impressed and the field angle and the sensor angle are acquired simultaneously.

## Revendications

1. Procédé de détermination de l'angle de décalage d'une machine électrique qui comporte un stator (10), un rotor (20) et un arbre relié au rotor (20),
la machine électrique étant une machine synchrone, une machine synchrone à excitation extérieure ou à auto-excitation, une machine synchrone à excitation permanente, une machine synchrone conçue comme module de traction électrique d'un entraînement hybride ou une machine à courant continu,
le procédé comportant les étapes qui consistent à :
brancher le rotor dans un état essentiellement exempt de charge,
agencer le rotor (20) par rapport au stator (10) à un angle de champ qui correspond à l'orientation d'un champ magnétique (B) créé par le rotor (20) par rapport à l'orientation d'un champ magnétique (A) créé par le stator (10), l'agencement du rotor (20) comportant l'étape qui consiste à appliquer sur l'enroulement de stator un courant qui imprime un champ magnétique rotatif de stator (A) qui correspond à l'angle de champ et qui met le rotor (20) en rotation,
**caractérisé par** les étapes qui consistent à :
saisir un angle de détecteur par mesure à l'aide d'un dispositif de mesure d'angle relié à l'arbre et configuré comme sonde numérique dotée de trois éléments de sonde, l'angle de sonde saisi étant associé à l'angle de champ, avec les étapes qui consistent à :
saisir les flancs des signaux numériques des éléments de sonde et les instants associés,
déterminer la vitesse de rotation à partir de la vitesse de la succession des flancs et
extrapoler l'angle de sonde à partir de l'instant du changement de flanc et de la vitesse de rotation,
déterminer un premier angle de décalage en fonction de la différence entre l'angle de champ et l'angle de sonde,
accélérer la machine électrique en tenant compte du premier angle de décalage en appliquant un champ magnétique rotatif de stator (A) dont la vitesse de rotation est plus élevée que la vitesse de rotation utilisée pour la détermination du premier angle de décalage,
libérer les enroulements du stator pendant que la rotation se poursuit sur la base de l'inertie du rotor et que l'angle de champ est saisi par mesure de l'évolution de la tension d'induction induite à l'intérieur de la machine électrique par la rotation du rotor (20),
saisir l'instant auquel la tension d'induction est la même pour deux enroulements du stator, l'angle correspondant à cet instant étant l'angle de champ,
saisir l'angle de sonde associé à l'instant auquel les tensions d'induction sont identiques et
déterminer le deuxième angle de décalage par formation de la différence entre l'angle de champ et l'angle de sonde.

2. Procédé selon la revendication 1, dans lequel le rotor (20) est agencé par application d'un champ magnétique de stator (A) tournant lentement, le champ magnétique de stator (A) tournant lentement présentant une vitesse de rotation à laquelle la résistance de l'air, le frottement sur les paliers et les autres charges qui freinent la rotation du rotor sont négligeables, et en prévoyant l'angle de champ comme l'angle qui correspond à l'orientation de l'enroulement (10) du stator qui crée le champ magnétique de stator (A) ou à la moyenne des angles de tous les enroulements du stator pondérés en fonction de la force qu'ils exercent sur le rotor (20).

3. Procédé selon les revendications 1 ou 2, dans lequel l'angle de décalage est prévu comme différence entre l'angle de champ et l'angle de sonde ou l'angle de décalage est prévu comme somme d'un angle de retenue et différence entre l'angle de champ et l'angle de sonde, l'angle de retenue correspondant à l'erreur angulaire entre un angle nul auquel aucune force n'est exercée sur le rotor (20) et un angle auquel une force identique à la force de frottement qui agit sur le rotor (20) est exercée sur le rotor (20).

4. Procédé selon l'une des revendications précédentes, dans lequel un champ rotatif de stator est appliqué et l'angle de champ et l'angle de sonde sont saisis simultanément.
